# EUROPEAN PATENT SPECIFICATION

(11) **EP 4 012 978 B1**
(45) Date of publication and mention of the grant of the patent: **25.11.2026**
(21) Application number: 20860951.1
(22) Date of filing: 03.09.2020
(51) Int. Cl.: H04L 41/0631, H04L 41/0894, H04L 41/22, H04L 41/16, H04L 41/14, H04L 45/28

(54) **METHOD AND DEVICE FOR DETERMINING ROOT CAUSE OF FAULT, SERVER AND COMPUTER-READABLE MEDIUM**
VERFAHREN UND VORRICHTUNG ZUM BESTIMMEN DER GRUNDURSACHE EINES FEHLERS, SERVER UND COMPUTERLESBARES MEDIUM
PROCÉDÉ ET DISPOSITIF POUR DÉTERMINER UNE CAUSE FONDAMENTALE DE DÉFAUT, SERVEUR ET MOYEN LISIBLE PAR ORDINATEUR

(30) Priority: 04.09.2019 CN 201910832361
(43) Date of publication of application: 15.06.2022
(73) Proprietor: ZTE Corporation, Shenzhen, Guangdong 518057 (CN)
(72) Inventor: HAN, Junhua, Shenzhen, Guangdong 518057 (CN)
(74) Representative: Canzler & Bergmeier Patentanwälte Partnerschaft mbB
(86) International application number: PCT/CN2020/113111
(87) International publication number: WO 2021/043184

(56) References cited:
- WO-A1-2008/000290
- WO-A1-2019/104196
- CN-A- 102 255 764
- CN-A- 105 391 579
- CN-A- 105 486 976
- CN-A- 105 786 763
- US-A1- 2011 231 704
- US-A1- 2012 005 533

## Description

### TECHNICAL FIELD

The present disclosure relates to the field of computer network technology.

### BACKGROUND

As sizes of bearer networks become larger and larger, structures of the networks are getting more and more complex, so that positioning of a root cause of a fault when the fault occurs needs investment of a larger amount of manpower and incurs high operation and maintenance cost. Moreover, a process of determining the root cause of the fault is long, and efficiency of the process is low. Therefore, it is urgent to find a method for determining a root cause of fault effectively and quickly.

WO2019104196 discloses a method for determining a probability of a failed node by using a Bayesian model.

US2011231704 discloses a method for collecting events and performing root cause analysis using Bayesian inference parameters defining the likelihood of the events being the root cause event.

US2012005533 discloses a method for determining that a problem occurred on a host based on a probabilistic model expressed as a directed acyclic graph.

### SUMMARY

In one aspect, the present disclosure provides a method for determining a root cause of a fault according to claim 1.

In still another aspect, the present disclosure provides a device for determining a root cause of a fault according to claim 8.

### BRIEF DESCRIPTION OF DRAWINGS

FIG. 1 is a flowchart illustrating a method for determining a root cause of fault according to the present disclosure;
FIG. 2 is another flowchart illustrating a method for determining a root cause of fault according to the present disclosure;
FIG. 3 is a flowchart of determining a fault root cause node according to the present disclosure;
FIG. 4 is a flowchart of determining a suspected fault root cause node according to the present disclosure;
FIG. 5 is a flowchart of generating a fault propagation graph according to the present disclosure;
FIG. 6 is a flowchart of building a Bayesian model according to the present disclosure;
FIG. 7 is a flowchart of preprocessing a fault propagation graph according to the present disclosure;
FIG. 8A and 8B are schematic diagrams illustrating deletion of a node and association relationships thereof from a fault propagation graph according to the present disclosure;
FIG. 9 is an exemplary fault propagation graph according to the present disclosure;
FIG. 10 is a schematic structural diagram of a device for determining a root cause of fault according to the present disclosure; and
FIG. 11 is another schematic structural diagram of a device for determining a root cause of fault according to the present disclosure.

### DETAIL DESCRIPTION OF EMBODIMENTS

Exemplary embodiments of the present disclosure will be described more fully below with reference to the drawings, but the exemplary embodiments described herein may be embodied in different forms and should not be interpreted as being limited to embodiments described herein. Rather, the embodiments are provided to make the present disclosure thorough and complete, and are intended to enable those of ordinary skill in the art to fully understand the scope of the present disclosure.

The term "and/or" used herein includes one associated listed item or any and all combinations of one or more of the associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise" and/or "be made of" used herein indicate(s) the presence of the described features, integers, operations, elements and/or components, but do not exclude the presence or addition of one or more other features, integers, operations, elements, components and/or combinations thereof.

The embodiments of the present disclosure can be described with reference to plans and/or cross-sectional views with the aid of idealized schematic diagrams of the present disclosure. Accordingly, the exemplary drawings may be modified according to manufacturing techniques and/or tolerances. The embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

Existing methods for determining a root cause of fault are mainly classified into the following three categories.
1) Root causes of faults are determined manually with a tool, that is, a conventional method for determining a root cause of fault. The conventional method mainly adopts manual analysis, with an aid of data collection by the tool. **In** general, related data is first collected, and then is subjected to manual analysis, investigation and positioning are performed step by step, and finally a conclusion is obtained. The conventional method has disadvantages that the method mainly relies on knowledge and experience of experts, is hard to be replicated and incurs high labor cost, a process of positioning a root cause of fault is long, and efficiency of the process is low.
2) The root causes of faults are determined based on rules. The method mainly includes summarizing knowledge and experience of operation and maintenance experts, obtaining corresponding diagnosis processes and diagnosis rules, and forming a strategy base and a rule base. According to differences between bearer services and service faults, corresponding fault diagnosis strategies and rules are made to determine a root cause of fault. The method has advantages that the knowledge and experience of the operation and maintenance experts can be well accumulated to be embodied in specific fault diagnosis strategies and rules, and automatic investigation and positioning of faults can be realized. However, the method has disadvantages that the method mainly relies on manual summarization of the rules, the investigation and positioning need to be performed step by step, a positioning period is long, and a system does not have self-learning capability.
3) The root causes of faults are determined based on a neural network. The method converts an issue of determining a root cause of fault into a classification issue suitable for being solved by the neural network, and is a data-driven method for determining a root cause of fault. Specifically, a training data set is formed by labeling fault data, and then a neural network model is trained to be endowed with capability to determine a root cause of fault. The method relies on large amount of high-quality labeled data, and has a disadvantage of relatively high requirements on the data.

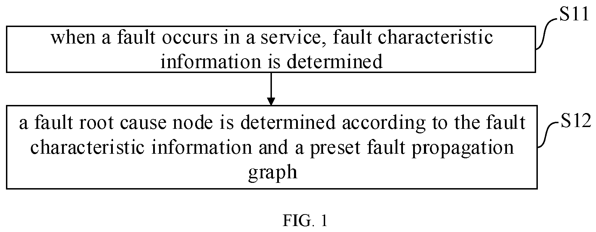

FIG. 1 is a flowchart illustrating a method for determining a root cause of fault according to the present disclosure. The method for determining a root cause of fault according to the present disclosure is described in detail below with reference to FIG. 1. As shown in FIG. 1, the method includes operations S11 and S12.

In the operation S11, when a fault occurs in a service, fault characteristic information is determined.

The fault characteristic information includes: the service where the fault occurs, a fault type, and an event related to the fault. The service where the fault occurs may include an L2VPN service, an L3VPN service, etc. The fault type may include packet loss of service, interruption of service, etc., and may be identified by using an existing service fault identification solution, or may be manually input. The event related to the fault is acquired according to a path of the service where the fault occurs: the path of the service where the fault occurs may be first restored according to configuration information of the service where the fault occurs and state information reported by the service where the fault occurs, and then the event related to the fault on the path of the service where the fault occurs is collected. The event related to the fault includes: an alarm, a notification, a performance exception, a configuration exception, a log exception, etc. After being acquired, the event related to the fault is standardized for being used in subsequent calculation of a fault root cause probability.

In the operation S12, a fault root cause node is determined according to the fault characteristic information and a preset fault propagation graph.

The fault propagation graph belongs to a knowledge graph which is a graphic data structure and consists of nodes (points) and edges, each node represents an entity existing in the real world, each edge represents a relationship between the entities, and information such as entities, concepts, attributes, time and relationships is included. The fault propagation graph expresses relationships in fault propagation by defining different types of nodes and edges. Specifically, the fault propagation graph is configured to represent directed association relationships among different fault propagation nodes, and directed association relationships among a fault node, the fault propagation nodes and fault root cause nodes. The nodes in the fault propagation graph are configured to represent the fault characteristic information, and include: the fault node configured to represent the fault type, the fault root cause nodes configured to represent fault root cause types, and the fault propagation nodes configured to represent events related to the fault types.

A fault node corresponds to a specific service fault and is a central starting point of a whole fault propagation graph. A fault root cause node corresponds to a specific fault root cause type and is a final result node of fault positioning. The fault propagation nodes correspond to various event nodes before and after occurrence of a fault, and are intermediate nodes in the fault propagation. When a fault occurs, the fault begins from the fault root cause node, passes through the fault propagation nodes, and arrives the fault node. For positioning a root cause of the fault, a positioning process may begin from the fault node through the fault propagation nodes until the fault root cause node is found.

According to the present disclosure, the association relationships are cause relationships, and have directions which are represented by arrows in the fault propagation graph, and attributes of an association relationship include name configured to represent "cause" or "lead to", for example, an association relationship between Node A and Node B is that Node A leads to Node B.

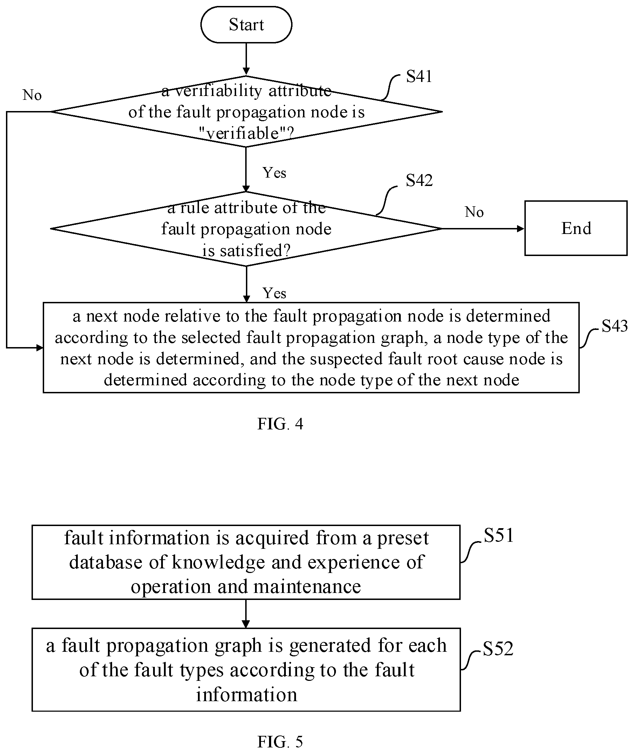

It should be noted that fault propagation graphs are classified according to the fault types, that is, one of the fault types corresponds to one of the fault propagation graphs. A fault propagation graph corresponding to each fault type is generated in an initialization stage, the fault propagation graph is obtained after knowledge extraction of knowledge and experience of operation and maintenance, and a specific process of generating the fault propagation graph will be described in detail later with reference to FIG. 5. The fault propagation graph may be stored in a plurality of ways including, but being not limited to, a graph database, a relational database, and a file including a graph data structure, etc., and the present disclosure takes a case where the fault propagation graph is stored in a graph database Orient DB as an example.

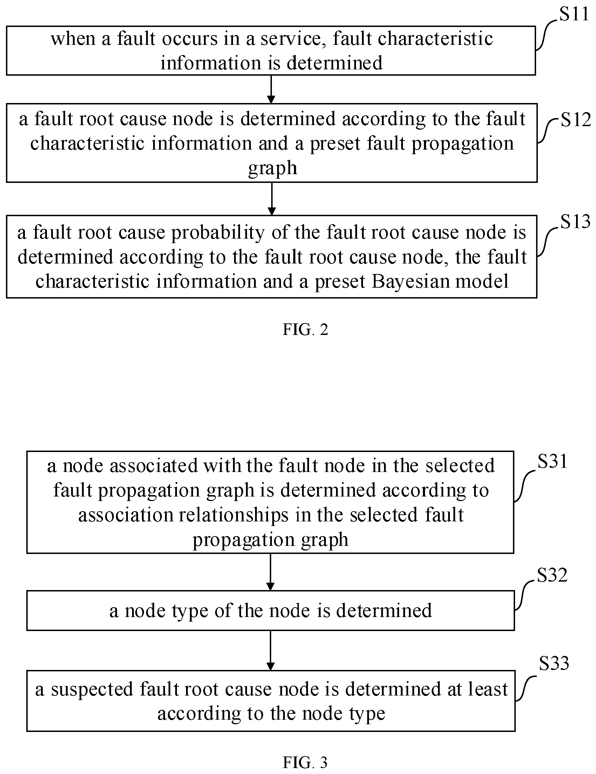

A specific implementation of determining the fault root cause node according to the fault characteristic information and the preset fault propagation graph will be described in detail later with reference to FIG. 3.

It can be seen from the operations S11 and S12 that, when the fault occurs in the service, the fault characteristic information is determined, and the fault root cause node is determined according to the fault characteristic information and the fault propagation graph. With the method provided by the present disclosure, the root cause of the fault is found by using the fault propagation graph, so that a period of determining the root cause of the fault can be shortened, and efficiency of accuracy of positioning of the root cause of the fault can be increased. The method for determining a root cause of fault provided by the present disclosure eliminates the need for manual work, reduces labor cost, does not have a high requirement on data, and is easy to implement.

FIG. 2 is another flowchart illustrating a method for determining a root cause of fault according to the present disclosure. As shown in FIG. 2, the method for determining a root cause of fault according to the present disclosure includes operations S11 to S13. The operations S11 and S12 in FIG. 2 are substantially the same as the operations S11 and S12 described with reference to FIG. 1, and thus are not repeatedly described here. After the fault root cause node is determined according to the fault characteristic information and the preset fault propagation graph (i.e., the operation S12), the method further includes the operation S13.

In the operation S13, a fault root cause probability of the fault root cause node is determined according to the fault root cause node, the fault characteristic information and a preset Bayesian model.

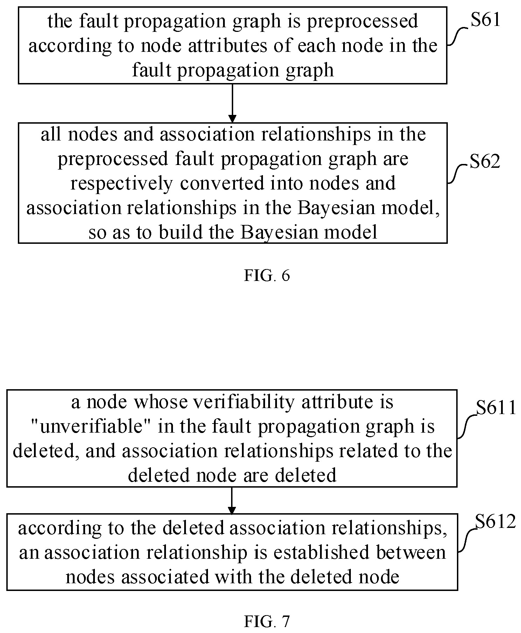

A Bayesian model is a probabilistic model, and is a graphical model based on probabilistic reasoning, and a specific process of building the Bayesian model will be described in detail later with reference to FIG. 6. The Bayesian model is a Directed Acyclic Graph (DAG), and consists of nodes representing variables, and directed edges connecting the nodes. The nodes represent random variables, the directed edges between the nodes represent relationships between the nodes (from a patent node to a child node), a conditional probability is configured to express relationship strength, and a prior probability is used for information expression on a node which has no parent node.

In the initialization stage, one Bayesian model is built for each fault propagation graph, and the Bayesian model and model parameters thereof are stored, that is, each fault type corresponds to one Bayesian model. It should be noted that the Bayesian model needs to be trained with training data after being built. The training data may come from accumulated historical statistics which are records of all historical fault information, which includes fault types, fault root cause types, fault-related events (including alarms, notifications, performance exceptions, configuration exceptions, log exceptions, etc.). In order to generate the training data, the historical statistics of faults may be standardized. Specifically, each fault corresponds to one row in the records, each dimension of the fault characteristic information corresponds to one column in the records, with 1 representing existence, and 0 representing nonexistence. The Bayesian model is trained after the standardized training data is obtained.

The Bayesian model may be stored in a plurality of ways including, but being not limited to, serializing objects with a pickle module provided by Python and storing in a magnetic disk in a file in PMML format.

In the operation S13, a corresponding Bayesian model is selected, information such as the fault root cause node, the fault type, and the event related to the fault is input to the selected Bayesian model, and the fault root cause probability of the fault root cause node is output after probabilistic reasoning by the Bayesian model.

When the fault occurs in the service, the fault characteristic information is determined, the fault root cause node is determined according to the fault characteristic information and the fault propagation graph, and the fault root cause probability of the fault root cause node is determined according to the fault root cause node, the fault characteristic information and the preset Bayesian model. By using the Bayesian model to convert an issue of positioning of the root cause of the fault into a machine learning issue, learning and probabilistic reasoning can be well performed based on the statistics, and the process of determining the root cause of the fault can take full advantage of a machine learning algorithm. The fault propagation graph is used to find the root cause of fault, and then the Bayesian model is used to perform reasoning to directly obtain the probability of the root cause of the fault. Thus, the period of determining the root cause of the fault is further shortened, and the efficiency and the accuracy of the positioning of the root cause of the fault are further increased.

According to the present disclosure, after the fault root cause probability of the fault root cause node is determined according to the fault root cause node, the fault characteristic information and the preset Bayesian model (i.e., the operation S13), the method for determining a root cause of fault may further include the following operation: sorting, according to fault root cause probabilities, fault root cause nodes corresponding thereto in an order, and displaying the order and the fault root cause probabilities of all the fault root cause nodes in the order. In this operation, the corresponding fault root cause nodes may be sorted in descending order of the fault root cause probabilities, and the order and the fault root cause probabilities of all the fault root cause nodes in the order are displayed. The displaying may be implemented in a plurality of ways including, but being not limited to, displaying in a list, and displaying in text form.

According to the present disclosure, the operation in which the fault root cause node is determined according to the fault characteristic information and the preset fault propagation graph (i.e., the operation S12) includes: selecting a fault propagation graph, a fault node in which is matched with the fault type, from all the preset fault propagation graphs, and determining the fault root cause node according to the selected fault propagation graph.

According to the present disclosure, the operation in which the fault root cause probability of the fault root cause node is determined according to the fault root cause node, the fault characteristic information and the preset Bayesian model (i.e., the operation S13) includes: selecting a Bayesian model corresponding to the selected fault propagation graph from all the preset Bayesian models, and determining the fault root cause probability of the fault root cause node according to the fault root cause node, the fault type, the event related to the fault and the selected Bayesian model.

A process of determining the fault root cause node according to the selected fault propagation graph is described in detail below with reference to FIG. 3. FIG. 3 is a flowchart of determining a fault root cause node according to the present disclosure. As shown in FIG. 3, the operation of determining the fault root cause node according to the selected fault propagation graph includes operations S31 to S33.

In the operation S31, a node associated with the fault node in the selected fault propagation graph is determined according to association relationships in the selected fault propagation graph.

The association relationships used in this operation are association relationships related to the fault node, and include an association relationship between the fault node and the fault root cause node, and an association relationship between the fault node and a fault propagation node.

In the operation S32, a node type of the node is determined.

**In** the fault propagation graph, the node type may include a fault node, a fault root cause node, and a fault propagation node. Since merely one fault node exists in the fault propagation graph, in this operation, the node type of the node associated with the fault node is the fault root cause node or the fault propagation node.

**In** the operation S33, a suspected fault root cause node is determined at least according to the node type.

The suspected fault root cause node is a fault root cause node in the selected fault propagation graph, and the number of the suspected fault root cause nodes is less than that of the fault root cause nodes in the selected fault propagation graph. That is, the suspected fault root cause node is a part of all fault root cause nodes in the whole fault propagation graph.

**In** this operation, if the node type of the node (i.e., the node associated with the fault node) is the fault root cause node, the node is determined to be the suspected fault root cause node, that is, if the node type of the node is the fault root cause node, a search for nodes in the fault propagation graph is terminated. If the node type of the node (i.e., the node associated with the fault node) is the fault propagation node, the suspected fault root cause node is determined according to node attributes of the node, that is, if the node type of the node is the fault propagation node, a search for an associated node in the fault propagation graph is continued.

A specific implementation of determining the suspected fault root cause node according to the node attributes of the fault propagation node will be described in detail later with reference to FIG. 4.

It should be noted that, if the suspected fault root cause node is determined according to the operations S31 to S33, the operation in which the fault root cause probability of the fault root cause node is determined according to the fault root cause node, the fault characteristic information and the preset Bayesian model (i.e., the operation S13) includes: determining a fault root cause probability of the suspected fault root cause node according to the suspected fault root cause node, the fault type, the event related to the fault and the selected Bayes model. That is, the suspected fault root cause node is input to the Bayes model in the operation S13.

Through the operations of S31 to S33, the fault root cause node which may cause the current fault in the fault propagation graph can be purposefully found, and instead of all the fault root cause nodes in the fault propagation graph, the found fault root cause node is used as an input variable to the Bayesian model, so that computational complexity of the Bayesian model can be reduced, and time for reasoning by the Bayesian model can be shortened, thereby further increasing the efficiency of the positioning of the root cause of the fault.

A process of determining the suspected fault root cause node according to the node attributes of the fault propagation node is described in detail below with reference to FIG. 4. FIG. 4 is a flowchart of determining a suspected fault root cause node according to the present disclosure. It should be noted that the process of determining the suspected fault root cause node shown in FIG. 4 is for a fault propagation node. As shown in FIG. 4, the process of determining the suspected fault root cause node according to the node attributes of the fault propagation node includes operations S41 to S43.

In the operation S41, it is determined whether a verifiability attribute of the fault propagation node is "verifiable", the operation S42 is performed if the verifiability attribute of the fault propagation node is "verifiable"; otherwise the operation S43 is performed.

Attributes of a node include: 1. name (Name), which represents a name of the node; 2. verifiability (isVerify), which represents whether the node can be verified through a specific rule, with 0 indicating that the node is unverifiable, and 1 indicating that the node is verifiable, and for a node whose verifiability attribute is "verifiable", a verification rule should be given; 3. rule (Rule), if the verifiability attribute of the node is "verifiable", it needs to be determined whether the node satisfies a corresponding rule.

If the verifiability attribute of the fault propagation node is determined to be "verifiable", whether the fault propagation node satisfies a rule thereof is then determined. If the fault propagation node fails to satisfy the rule thereof, the search for nodes is terminated; and if the fault propagation node satisfies the rule, a search for a next node is carried out, and the suspected fault root cause node is determined according to a node type of the next node, so as to find all suspected root cause nodes.

In the operation S42, it is determined whether a rule attribute of the fault propagation node is satisfied, the operation S43 is performed if the rule attribute of the fault propagation node is satisfied; otherwise the process is ended, that is, determination of a next node relative to the fault propagation node is not carried out.

In the operation S43, a next node relative to the fault propagation node is determined according to the selected fault propagation graph, a node type of the next node is determined, and the suspected fault root cause node is determined according to the node type of the next node.

It can be seen from the operations S41 to S43 that all possible fault root cause nodes can be found based on a search algorithm of the fault propagation graph. If the node type of the node is the fault propagation node, the node attributes of the fault propagation node are first determined, and if the verifiability attribute included in the node attributes represents that the node is verifiable, it is determined based on the rule of the node included in the node attributes whether the node satisfies the rule. If the node fails to satisfy the rule, the search for nodes in the fault propagation graph is terminated; and if the node satisfies the rule, the search for the next node is carried out in the fault propagation graph until all fault propagation nodes which satisfy the rule thereof are traversed, so as to find all suspected fault root cause nodes.

The above operations are illustrated below by taking a scenario of packet loss of a L3VPN service as an example, and an Orient DB graph database is used to store a fault propagation graph of the packet loss of the L3VPN service in the scenario. The fault node corresponds to a node where the packet loss of the L3VPN service occurs, and the fault propagation nodes include nodes where packet loss of a forwarding queue, an out-of-limit alarm of bandwidth utilization, an out-of-limit alarm of CPU utilization, an error alarm of a critical chip, an out-of-limit alarm of temperature of a critical chip and the like occur. The fault root cause nodes include nodes where a fan failure, blocking of an air duct, temperature anomaly of a machine room, unreasonable setting of a fan speed, a rapid increase of external flow, an MAC configuration conflict and the like occur.

Taking a case where the nodes where "packet loss of a forwarding queue" and "an out-of-limit alarm of bandwidth utilization" occur are the fault propagation nodes as an example, a verifiability attribute of the node where "packet loss of a forwarding queue" occurs is "unverifiable", and a node whose verifiability attribute is "unverifiable" is merely used for supporting a search process. A verifiability attribute of the node where "an out-of-limit alarm of bandwidth utilization" occurs is "verifiable", and a rule of the node is: searching to determine whether the out-of-limit alarm of bandwidth utilization exists. If the out-of-limit alarm of bandwidth utilization exists, the rule is satisfied, and the fault root cause node may be further searched for.

Scripts of the corresponding rule are as follows:
update Propagation set isVerify=false where name="packet loss of a forwarding queue"
update Propagation set isVerify=true where name="an out-of-limit alarm of bandwidth utilization"
update Propagation set rule="alarm_systemtype==4613 and (alarm_code==1633 or alarm_code==1634)" where name="an out-of-limit alarm of bandwidth utilization"

If the above rule is satisfied, a search for a corresponding node for the node needs to be continued according to the association relationships (i.e., cause-effect directions) of the node until the fault root cause node is found.

A process of generating the fault propagation graph is described in detail below with reference to FIG. 5. FIG. 5 is a flowchart of generating a fault propagation graph according to the present disclosure. As shown in FIG. 5, an operation of generating the fault propagation graph includes operations S51 and S52.

In the operation S51, fault information is acquired from a preset database of knowledge and experience of operation and maintenance.

**In** this operation, knowledge extraction is first performed on the database of knowledge and experience of operation and maintenance to obtain the fault information, which includes the fault types, the fault root cause types, the events related to the fault types (including alarms, notifications, performance exceptions, configuration exceptions, log exceptions, etc.), and association relationships among the fault types, the fault root cause types and the events related to the fault types.

**In** the operation S52, a fault propagation graph is generated for each of the fault types according to the fault information.

According to the present disclosure, the fault type corresponds to the fault node, the fault root cause types correspond to the fault root cause nodes, the events related to the fault types correspond to the fault propagation nodes, and a directed fault propagation graph is generated according to the association relationships among the fault types, the fault root cause types and the events related to the fault types.

Through the operations S51 to S52, the knowledge graph technology is adopted to construct a knowledge graph of fault propagation to represent and store the fault propagation graph. Specifically, relationships in fault propagation are expressed by defining the different types of nodes, the association relationships among the nodes, and attributes of the nodes. By adopting the fault propagation graph and the knowledge graph technology, the knowledge and experience of the operation and maintenance experts can be well represented and stored, and the positioning of the root cause of the fault takes full advantage of the knowledge and experience of the operation and maintenance experts, thereby increasing the accuracy of the positioning of the root cause of the fault.

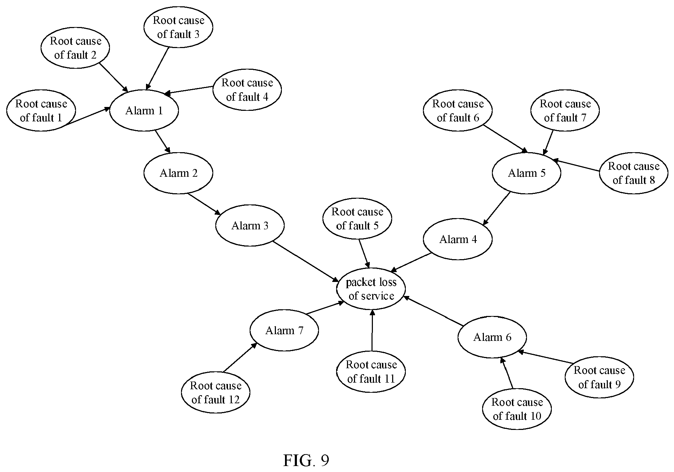

FIG. 9 is an exemplary fault propagation graph for the fault type of "packet loss of service", and the fault propagation graph includes 12 fault root cause nodes, and is illustrated by taking an alarm event as an example. Apparently, it should be known by those of ordinary skill in the art that the fault propagation graph may be illustrated by taking an even of another type as an example.

According to the present disclosure, the Bayesian model is generated according to the fault propagation graph. FIG. 6 is a flowchart of building a Bayesian model according to the present disclosure. A process of building the Bayesian model is described in detail below with reference to FIG. 6. As shown in FIG. 6, an operation of building the Bayesian model includes operations S61 and S62.

In the operation S61, the fault propagation graph is preprocessed according to node attributes of each node in the fault propagation graph.

Since each node in a Bayesian network represents a random variable, if a node in the fault propagation graph cannot be represented by a random variable, the information about such node needs to be removed. According to the present disclosure, a structure of the fault propagation graph may be adjusted according to verifiability attributes of the nodes.

In the operation S62, all nodes and association relationships in the preprocessed fault propagation graph are respectively converted into nodes and association relationships in the Bayesian model, so as to build the Bayesian model.

According to the present disclosure, as shown in FIG. 7, the operation in which the fault propagation graph is preprocessed according to the node attributes of each node in the fault propagation graph (i.e., the operation S61) includes operations S611 and S612.

In the operation S611, a node whose verifiability attribute is "unverifiable" in the fault propagation graph is deleted, and association relationships related to the deleted node are deleted.

In the operation S612, according to the deleted association relationships, an association relationship is established between nodes associated with the deleted node.

If a verifiability attribute of a node in the fault propagation graph is "unverifiable", the node is deleted, and the association relationships (i.e., the edges in the fault propagation graph) related to the node also needs to be adjusted after the node is deleted. A principle of adjustment of the association relationships is deleting the association relationships related to the deleted node, and establishing, according to the deleted association relationships, an association relationship between the nodes which are respectively related to the deleted node, so as to obtain the preprocessed fault propagation graph.

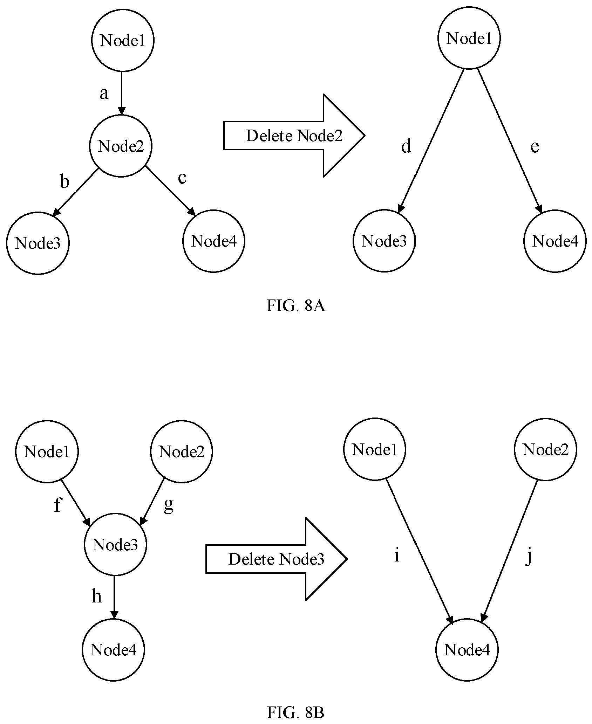

For clarify the technical solutions of the present disclosure, a method for preprocessing the fault propagation graph is described in detail below with reference to FIG. 8A and FIG. 8B.

FIG. 8A and 8B are schematic diagrams illustrating deletion of a node and association relationships thereof from a fault propagation graph according to the present disclosure.

As shown in FIG. 8A, in a case where a verifiability attribute of a fault propagation node (Node 2) in a fault propagation graph is "unverifiable", in a process of preprocessing the fault propagation graph, Node 2 and association relationships a, b and c related to Node 2 are deleted from the fault propagation graph, association relationship d is established between Node 1 and Node 3 which are related to Node 2 according to association relationships a and b, and association relationship e is established between Node 1 and Node 4 which are related to Node 2 according to association relationships a and c.

As shown in FIG. 8B, in a case where a verifiability attribute of a fault propagation node (Node 3) in a fault propagation graph is "unverifiable", in a process of preprocessing the fault propagation graph, Node 3 and association relationships f, g and h related to Node 3 are deleted from the fault propagation graph, association relationship i is established between Node 1 and Node 4 which are related to Node 3 according to association relationships f and h, and association relationship j is established between Node 2 and Node 4 which are related to Node 3 according to association relationships g and h.

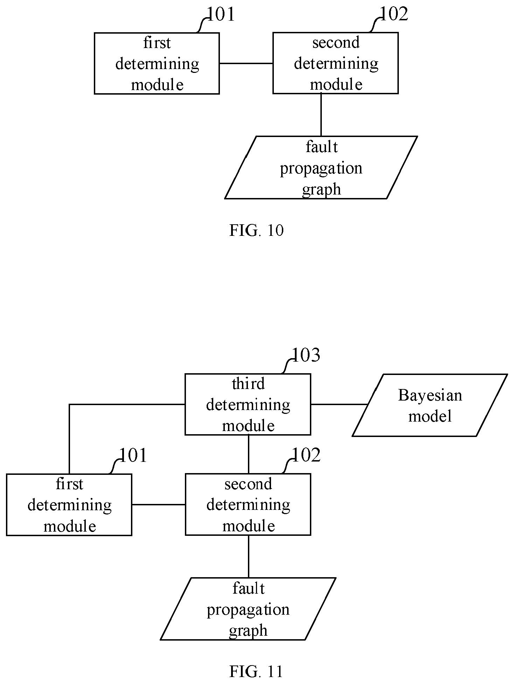

The present disclosure further provides a device for determining a root cause of fault. FIG. 10 is a schematic structural diagram of a device for determining a root cause of fault according to the present disclosure. As shown in FIG. 10, the device for determining a root cause of fault includes a first determining module 101 and a second determining module 102.

The first determining module 101 is configured to determine fault characteristic information when a fault occurs in a service.

The second determining module 102 is configured to determine a fault root cause node according to the fault characteristic information and a preset fault propagation graph. The fault propagation graph is configured to represent directed association relationships among different fault propagation nodes, and directed association relationships among a fault node, the fault propagation nodes and fault root cause nodes. The nodes in the fault propagation graph are configured to represent the fault characteristic information.

FIG. 11 is another schematic structural diagram of a device for determining a root cause of fault according to the present disclosure. As shown in FIG. 11, in addition to including the first determining module 101 and the second determining module 102 described with reference to FIG. 10, the device for determining a root cause of fault further includes a third determining module 103 configured to determine a fault root cause probability of the fault root cause node according to the fault root cause node, the fault characteristic information, and a preset Bayesian model.

According to the present disclosure, the device for determining a root cause of fault may further include a sorting and displaying module (not shown) configured to sort, according to fault root cause probabilities, fault root cause nodes corresponding thereto in an order, and display the order and the fault root cause probabilities of all the fault root cause nodes in the order.

According to the present disclosure, the first determining module 101 is further configured to determine the service where the fault occurs and a fault type, determine a path of the service where the fault occurs, and acquire an event related to the fault according to the path.

According to the present disclosure, the second determining module 102 is further configured to select a fault propagation graph, a fault node in which is matched with the fault type, from all the preset fault propagation graphs, and determine the fault root cause node according to the selected fault propagation graph.

According to the present disclosure, the third determining module 103 is further configured to select a Bayesian model corresponding to the selected fault propagation graph from all the preset Bayesian models, and determine the fault root cause probability of the fault root cause node according to the fault root cause node, the fault type, the event related to the fault and the selected Bayesian model.

According to the present disclosure, the second determining module 102 is further configured to determine a node associated with the fault node in the selected fault propagation graph according to association relationships in the selected fault propagation graph, determine a node type of the node, and determine a suspected fault root cause node at least according to the node type. The suspected fault root cause node is a fault root cause node in the selected fault propagation graph, and the number of the suspected fault root cause nodes is less than that of the fault root cause nodes in the selected fault propagation graph.

According to the present disclosure, the third determining module 103 is further configured to determine a fault root cause probability of the suspected fault root cause node according to the suspected fault root cause node, the fault type, the event related to the fault and the selected Bayes model.

According to the present disclosure, the node type at least include a fault root cause node and a fault propagation node. The second determining module 102 is further configured to take, when the node type of the node is the fault root cause node, the fault root cause node as the suspected fault root cause node, and determine, when the node type of the node is the fault propagation node, the suspected fault root cause node according to node attributes of the fault propagation node.

According to the present disclosure, the second determining module 102 is further configured to determine whether a rule attribute of the node is satisfied when the node type of the node is the fault propagation node and a verifiability attribute of the node is "verifiable". If the rule attribute is satisfied, the second determining module 102 is further configured to determine a next node relative to the node according to the selected fault propagation graph, determine a node type of the next node, and determine the suspected fault root cause node according to the node type of the next node. If the rule attribute is not satisfied, the second determining module 102 is further configured to stop determining the next node relative to the node. When the node type of the node is the fault propagation node and the verifiability attribute of the node is "unverifiable", the second determining module 102 is further configured to determine the next node relative to the node according to the selected fault propagation graph, determine the node type of the next node, and determine the suspected fault root cause node according to the node type of the next node.

According to the present disclosure, the device for determining a root cause of fault may further include a fault propagation graph generation module configured to acquire, from a preset database of knowledge and experience of operation and maintenance, fault information including: fault types, fault root cause types, events related to the fault types, and association relationships among the fault types, the fault root cause types and the events related to the fault types, and generate a fault propagation graph for each of the fault types according to the fault information, and the fault propagation graph is a knowledge graph of fault propagation.

According to the present disclosure, the device for determining a root cause of fault may further include a Bayesian model building module configured to build the Bayesian model according to the fault propagation graph.

According to the present disclosure, the Bayesian model building module is further configured to preprocess the fault propagation graph according to node attributes of each node in the fault propagation graph, and respectively convert all nodes and association relationships in the preprocessed fault propagation graph into nodes and association relationships in the Bayesian model, so as to build the Bayesian model.

According to the present disclosure, the Bayesian model building module is further configured to delete a node whose verifiability attribute is "unverifiable" in the fault propagation graph, delete association relationships related to the deleted node, and establish, according to the deleted association relationships, an association relationship between nodes associated with the deleted node.

The present disclosure further provides a server, including: one or more processors, and a storage device having one or more programs stored thereon. When the one or more programs are executed by the one or more processors, the one or more processors implement the above method for determining a root cause of fault.

The present disclosure further provides a computer-readable medium having a computer program stored thereon. When the computer program is executed, the above method for determining a root cause of fault is implemented.

It should be understood by those of ordinary skill in the art that the functional modules/units in all or some of the operations, and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A method for determining a root cause of fault, comprising:
determining (S11) fault characteristic information in response to a fault occurring in a service, wherein the fault characteristic information at least comprises a service where a fault occurs, a fault type, and an event related to the fault, the event related to the fault at least comprises an alarm, a notification, a performance exception, a configuration exception, a log exception; and
determining (S12) a fault root cause node according to the fault characteristic information and a preset fault propagation graph,
wherein the preset fault propagation graph corresponds to the fault type and consists of nodes and edges, the nodes comprise one fault node for representing the fault type, a plurality of fault root cause nodes for representing fault root cause types of fault root causes, and a plurality of fault propagation nodes for representing events related to the fault and between the plurality of fault root cause nodes and the fault node, an edge of the edges which connects two nodes of the nodes, represents an association relationship having a direction between the two nodes, and the association relationship represents a cause relationship, each of the fault root cause nodes is directly connected to the fault node without any fault propagation node or is connected to the fault node via at least one of the fault propagation nodes, when the fault occurs, the fault begins from one of the plurality of fault root cause node, passes through at least of the plurality of fault propagation nodes, and arrives to the fault node,
wherein the event related to the fault in the fault characteristic information corresponds to one of the events related to the fault in the preset fault propagation graph,
wherein determining (S12) the fault root cause node according to the fault characteristic information and the preset fault propagation graph comprises:
selecting the preset fault propagation graph from all preset fault propagation graphs; and
determining the fault root cause node according to the selected fault propagation graph,
wherein determining the fault root cause node according to the selected fault propagation graph comprises:
determining (S31) a node having an association relationship with the fault node in the selected fault propagation graph according to association relationships in the selected fault propagation graph; and
determining (S32) a node type of the node, wherein the node type indicates the node is a fault root cause node or a fault propagation node; and
determining (S33) a suspected fault root cause node at least according to the node type, wherein the suspected fault root cause node is one of the plurality of fault root cause nodes in the selected fault propagation graph, and the number of suspected fault root cause nodes is less than that of fault root cause nodes in the selected fault propagation graph, and
wherein determining (S33) the suspected fault root cause node at least according to the node type comprises:
in response to the node type indicating the node is the fault root cause node, determining the node as the suspected fault root cause node.

2. The method of claim 1, wherein determining (S11) the fault characteristic information comprises:
determining a path of the service where the fault occurs; and
acquiring the event related to the fault according to the path.

3. The method of claim 2, wherein after determining the fault root cause node according to the selected fault propagation graph, the method further comprises:
selecting a Bayesian model corresponding to the selected fault propagation graph from preset Bayesian models; and
inputting the fault root cause node, the fault type and the event related to the fault into the selected Bayesian model, outputting a fault root cause probability of the fault root cause node through probabilistic reasoning by the selected Bayesian model.

4. The method of claim 2, wherein determining (S33) the suspected fault root cause node at least according to the node type further comprises:
in response to node type indicating the node is the fault propagation node, determining the suspected fault root cause node according to node attributes of the node,
wherein determining the suspected fault root cause node according to node attributes of the node comprises:
determining whether a verifiability attribute of the node is "verifiable" or "unverifiable";
in response to the verifiability attribute of the node being "verifiable", determining whether a rule attribute of the node is satisfied;
in response to the rule attribute being satisfied, determining a next node having an association relationship with the node according to the selected fault propagation graph, determining a node type of the next node, and determining the suspected fault root cause node according to the node type of the next node; and in response to the rule attribute being not satisfied, stopping determining the next node having the association relationship with the node; and
in response to the verifiability attribute of the node being "unverifiable", determining the next node having the association relationship with the node according to the selected fault propagation graph, determining the node type of the next node, and determining the suspected fault root cause node according to the node type of the node,
wherein the verifiability attribute represents whether the fault propagation node is "verifiable" or "unverifiable" through the rule attribute.

5. The method of claim 4, wherein after determining the suspected fault root cause node, the method further comprises:
selecting a Bayesian model corresponding to the selected fault propagation graph from preset Bayesian models; and
inputting the suspected fault root cause node, the fault type and the event related to the fault into the selected Bayesian model, outputting a fault root cause probability of the suspected fault root cause node by the selected Bayesian model.

6. The method of any one of claims 1 to 5, further comprising generating a fault propagation graph, which comprises:
acquiring (S51), from a preset database of knowledge and experience of operation and maintenance, fault information comprising fault types, fault root cause types, events related to the fault types, and association relationships among the fault types, the fault root cause types and the events related to the fault types; and
generating (S52) a fault propagation graph for each of the fault types according to the fault information, wherein the fault propagation graph is a knowledge graph of fault propagation.

7. The method of claim 3 or 5, further comprising building the Bayesian model, which comprises:
deleting (S611) a node whose verifiability attribute is "unverifiable" in the fault propagation graph;
deleting (S611) association relationships related to the deleted node;
establishing (S612), according to the deleted association relationships, an association relationship between nodes associated with the deleted node, so as to obtain a preprocessed fault propagation graph; and
respectively converting (S62) all nodes and association relationships in the preprocessed fault propagation graph into nodes and association relationships in the Bayesian model, so as to build the Bayesian model,
wherein the verifiability attribute represents whether the node is "verifiable" or "unverifiable" through a rule attribute of the node.

8. A device for determining a root cause of fault, comprising: a first determining module (101) and a second determining module (102), wherein
the first determining module (101) is configured to determine fault characteristic information in response to a fault occurring in a service, wherein the fault characteristic information at least comprises a service where a fault occurs, a fault type, and an event related to the fault, the event related to the fault at least comprises an alarm, a notification, a performance exception, a configuration exception, a log exception; and
the second determining module (102) is configured to determine a fault root cause node according to the fault characteristic information and a preset fault propagation graph,
wherein the preset fault propagation graph corresponds to the fault type and consists of nodes and edge, the nodes comprise one fault node for representing the fault type, a plurality of fault root cause nodes for representing fault root cause types of fault root causes, and a plurality of fault propagation nodes for representing events related to the fault and between the plurality of fault root cause nodes and the fault node, an edge of the edges which connects two nodes of the nodes, represents an association relationship having a direction between the two nodes, and the association relationship represents a cause relationship, each of the fault root cause nodes is directly connected to the fault node without any fault propagation node or is connected to the fault node via at least one of the fault propagation nodes, when the fault occurs, the fault begins from one of the plurality of fault root cause node, passes through at least of the plurality of fault propagation nodes, and arrives to the fault node,
wherein the event related to the fault in the fault characteristic information corresponds to one of the events related to the fault in the preset fault propagation graph,
wherein the second determining module (102) is further configured to select the preset fault propagation graph from all preset fault propagation graphs, and determine the fault root cause node according to the selected fault propagation graph,
wherein the second determining module (102) is further configured to determine a node having an association relationship with the fault node in the selected fault propagation graph according to association relationships in the selected fault propagation graph, determine a node type of the node, and determine a suspected fault root cause node at least according to the node type, wherein the node type indicates the node is a fault root cause node or a fault propagation node, the suspected fault root cause node is one of the plurality fault root cause node in the selected fault propagation graph, and the number of suspected fault root cause nodes is less than that of fault root cause nodes in the selected fault propagation graph, and
wherein the second determining module (102) is further configured to, in response to the node type indicating the node is the fault root cause node, determine the node as the suspected fault root cause node.

9. The device for determining a root cause of fault of claim 8, wherein the first determining module (101) is further configured to determine a path of the service where the fault occurs, and acquire the event related to the fault according to the path.

10. The device for determining a root cause of fault of claim 9, further comprising a third determining module (103) configured to select a Bayesian model corresponding to the selected fault propagation graph from preset Bayesian models, input the fault root cause node, the fault type and the event related to the fault into the selected Bayesian model, and output a fault root cause probability of the fault root cause node through probabilistic reasoning by the selected Bayesian model.

11. The device for determining a root cause of fault of claim 8, wherein the second determining module (102) is further configured to, in response to node type being the fault propagation node, determine the suspected fault root cause node according to node attributes of the node,
wherein the second determining module (102) is further configured to, in response to the node type indicating the node is the fault propagation node, determining whether a verifiability attribute of the node is "verifiable" or "unverifiable", and
wherein the second determining module (102) is further configured to, in response to the verifiability attribute of the node being "verifiable", determine whether a rule attribute of the node is satisfied;
in response to the rule attribute being satisfied, the second determining module (102) is further configured to determine a next node having an association relationship with the fault propagation node according to the selected fault propagation graph, determine a node type of the next node, and determine the suspected fault root cause node according to the node type of the next node;
in response to the rule attribute being not satisfied, the second determining module (102) is further configured to stop determining the next node having the association relationship with the fault propagation node;
in response to the verifiability attribute of the node being "unverifiable", the second determining module (102) is further configured to determine the next node having the association relationship with the fault propagation node according to the selected fault propagation graph, determine the node type of the next node, and determine the suspected fault root cause node according to the node type of the next node,
wherein the verifiability attribute represents whether the fault propagation node is "verifiable" or "unverifiable" through the rule attribute..

12. The device for determining a root cause of fault of claim 11, further comprising a third determining module (103) configured to select a Bayesian model corresponding to the selected fault propagation graph from preset Bayesian models, input the suspected fault root cause node, the fault type and the event related to the fault into the selected Bayesian model, and output a fault root cause probability of the suspected fault root cause node by the selected Bayesian model.

13. The device for determining a root cause of fault of any one of claims 8 to 12, further comprising a fault propagation graph generation module configured to
acquire, from a preset database of knowledge and experience of operation and maintenance, fault information comprising fault types, fault root cause types, events related to the fault types, and association relationships among the fault types, the fault root cause types and the events related to the fault types, and
generate a fault propagation graph for each of the fault types according to the fault information, wherein the fault propagation graph is a knowledge graph of fault propagation.

14. The device for determining a root cause of fault of claim 10 or 12, further comprising a Bayesian model building module configured to
delete a node whose verifiability attribute is "unverifiable" in the fault propagation graph,
delete association relationships related to the deleted node,
establish, according to the deleted association relationships, an association relationship between nodes associated with the deleted node, so as to obtain a preprocessed fault propagation graph, and
respectively convert all nodes and association relationships in the preprocessed fault propagation graph into nodes and association relationships in the Bayesian model, so as to build the Bayesian model,
wherein the verifiability attribute represents whether the node is "verifiable" or "unverifiable" through a rule attribute of the node.

## Patentansprüche

1. Verfahren zum Bestimmen einer Grundursache eines Fehlers, umfassend:
Bestimmen (S11) von Fehlereigenschaftsinformationen als Reaktion auf einen Fehler, der in einem Service auftritt, wobei die Fehlereigenschaftsinformationen mindestens einen Service, bei dem ein Fehler auftritt, einen Fehlertyp und ein Ereignis in Bezug auf den Fehler umfassen, wobei das Ereignis in Bezug auf den Fehler mindestens einen Alarm, eine Benachrichtigung, eine Durchführungsausnahme, eine Konfigurationsausnahme, eine Protokollausnahme umfasst; und
Bestimmen (S12) eines Fehlergrundursachenknotens gemäß den Fehlereigenschaftsinformationen und einem voreingestellten Fehlerausbreitungsgraphen,
wobei der voreingestellte Fehlerausbreitungsgraph dem Fehlertyp entspricht und aus Knoten und Kanten besteht, wobei die Knoten einen Fehlerknoten zum Repräsentieren des Fehlertyps, eine Vielzahl von Fehlergrundursachenknoten zum Repräsentieren von Fehlergrundursachentypen von Fehlergrundursachen und eine Vielzahl von Fehlerausbreitungsknoten zum Repräsentieren von Ereignissen in Bezug auf den Fehler und zwischen der Vielzahl von Fehlergrundursachenknoten und dem Fehlerknoten umfassen, wobei eine Kante der Kanten, die zwei Knoten der Knoten verbindet, eine Zuordnungsbeziehung repräsentiert, die eine Richtung zwischen den zwei Knoten aufweist, und die Zuordnungsbeziehung eine Ursachenbeziehung repräsentiert, wobei jeder der Fehlergrundursachenknoten ohne einen Fehlerausbreitungsknoten direkt mit dem Fehlerknoten verbunden ist oder über mindestens einen der Fehlerausbreitungsknoten mit dem Fehlerknoten verbunden ist, wobei, wenn der Fehler auftritt, der Fehler an einem der Vielzahl von Fehlergrundursachenknoten beginnt, durch mindestens die Vielzahl von Fehlerausbreitungsknoten verläuft und an dem Fehlerknoten ankommt,
wobei das Ereignis in Bezug auf den Fehler in den Fehlereigenschaftsinformationen einem der Ereignisse in Bezug auf den Fehler in dem voreingestellten Fehlerausbreitungsgraphen entspricht,
wobei das Bestimmen (S12) des Fehlergrundursachenknotens gemäß den Fehlereigenschaftsinformationen und dem voreingestellten Fehlerausbreitungsgraphen umfasst:
Auswählen des voreingestellten Fehlerausbreitungsgraphen aus allen voreingestellten Fehlerausbreitungsgraphen; und
Bestimmen des Fehlergrundursachenknotens gemäß dem ausgewählten Fehlerausbreitungsgraphen,
wobei das Bestimmen des Fehlergrundursachenknotens gemäß dem ausgewählten Fehlerausbreitungsgraphen umfasst:
Bestimmen (S31) eines Knotens, der eine Zuordnungsbeziehung mit dem Fehlerknoten in dem ausgewählten Fehlerausbreitungsgraphen aufweist, gemäß Zuordnungsbeziehungen in dem ausgewählten Fehlerausbreitungsgraphen; und
Bestimmen (S32) eines Knotentyps des Knotens, wobei der Knotentyp angibt, dass der Knoten ein Fehlergrundursachenknoten oder ein Fehlerausbreitungsknoten ist; und
Bestimmen (S33) eines vermuteten Fehlergrundursachenknotens zumindest gemäß dem Knotentyp, wobei der vermutete Fehlergrundursachenknoten einer der Vielzahl von Fehlergrundursachenknoten in dem ausgewählten Fehlerausbreitungsgraphen ist und die Anzahl von vermuteten Fehlergrundursachenknoten kleiner ist als die von Fehlergrundursachenknoten in dem ausgewählten Fehlerausbreitungsgraphen, und
wobei das Bestimmen (S33) des vermuteten Fehlergrundursachenknotens zumindest gemäß dem Knotentyp umfasst:
als Reaktion darauf, dass der Knotentyp angibt, dass der Knoten der Fehlergrundursachenknoten ist, Bestimmen des Knotens als den vermuteten Fehlergrundursachenknoten.

2. Verfahren nach Anspruch 1, wobei das Bestimmen (S11) der Fehlereigenschaftsinformationen umfasst:
Bestimmen eines Pfades des Service, bei dem der Fehler auftritt; und
Erfassen des Ereignisses in Bezug auf den Fehler gemäß dem Pfad.

3. Verfahren nach Anspruch 2, wobei nach dem Bestimmen des Fehlergrundursachenknotens gemäß dem ausgewählten Fehlerausbreitungsgraphen das Verfahren ferner umfasst:
Auswählen eines Bayesschen Modells, das dem ausgewählten Fehlerausbreitungsgraphen entspricht, aus voreingestellten Bayesschen Modellen; und
Eingeben des Fehlergrundursachenknotens, des Fehlertyps und des Ereignisses in Bezug auf den Fehler in das ausgewählte Bayessche Modell, Ausgeben einer Fehlergrundursachenwahrscheinlichkeit des Fehlergrundursachenknotens durch probabilistisches Schlussfolgern durch das ausgewählte Bayessche Modell.

4. Verfahren nach Anspruch 2, wobei das Bestimmen (S33) des vermuteten Fehlergrundursachenknotens zumindest gemäß dem Knotentyp ferner umfasst:
als Reaktion darauf, dass der Knotentyp angibt, dass der Knoten der Fehlerausbreitungsknoten ist, Bestimmen des vermuteten Fehlergrundursachenknotens gemäß Knotenattributen des Knotens,
wobei das Bestimmen des vermuteten Fehlergrundursachenknotens gemäß Knotenattributen des Knotens umfasst:
Bestimmen, ob ein Verifizierbarkeitsattribut des Knotens ´´verifizierbar´´ oder ´´nicht verifizierbar´´ ist;
als Reaktion darauf, dass das Verifizierbarkeitsattribut des Knotens ´´verifizierbar´´ ist, Bestimmen, ob ein Regelattribut des Knotens erfüllt ist;
als Reaktion darauf, dass das Regelattribut erfüllt ist, Bestimmen eines nächsten Knotens, der eine Zuordnungsbeziehung mit dem Knoten aufweist, gemäß dem ausgewählten Fehlerausbreitungsgraphen, Bestimmen eines Knotentyps des nächsten Knotens und Bestimmen des vermuteten Fehlergrundursachenknotens gemäß dem Knotentyp des nächsten Knotens; und als Reaktion darauf, dass das Regelattribut nicht erfüllt ist, Stoppen des Bestimmens des nächsten Knotens, der die Zuordnungsbeziehung mit dem Knoten aufweist; und
als Reaktion darauf, dass das Verifizierbarkeitsattribut des Knotens ´´nicht verifizierbar´´ ist, Bestimmen des nächsten Knotens, der die Zuordnungsbeziehung mit dem Knoten aufweist, gemäß dem ausgewählten Fehlerausbreitungsgraphen, Bestimmen des Knotentyps des nächsten Knotens und Bestimmen des vermuteten Fehlergrundursachenknotens gemäß dem Knotentyp des Knotens,
wobei das Verifizierbarkeitsattribut repräsentiert, ob der Fehlerausbreitungsknoten durch das Regelattribut ´´verifizierbar´´ oder ´´nicht verifizierbar´´ ist.

5. Verfahren nach Anspruch 4, wobei das Verfahren nach dem Bestimmen des vermuteten Fehlergrundursachenknotens ferner umfasst:
Auswählen eines Bayesschen Modells, das dem ausgewählten Fehlerausbreitungsgraphen entspricht, aus voreingestellten Bayesschen Modellen; und
Eingeben des vermuteten Fehlergrundursachenknotens, des Fehlertyps und des Ereignisses in Bezug auf den Fehler in das ausgewählte Bayessche Modell, Ausgeben einer Fehlergrundursachenwahrscheinlichkeit des vermuteten Fehlergrundursachenknotens durch das ausgewählte Bayessche Modell.

6. Verfahren nach einem der Ansprüche 1 bis 5, ferner umfassend das Erzeugen eines Fehlerausbreitungsgraphen, der umfasst:
Erfassen (S51), aus einer voreingestellten Datenbank von Wissen und Erfahrung von Betrieb und Wartung, von Fehlerinformationen, die Fehlertypen, Fehlergrundursachentypen, Ereignisse in Bezug auf die Fehlertypen und Zuordnungsbeziehungen zwischen den Fehlertypen, den Fehlergrundursachentypen und den Ereignissen in Bezug auf die Fehlertypen umfassen; und
Erzeugen (S52) eines Fehlerausbreitungsgraphen für jeden der Fehlertypen gemäß den Fehlerinformationen, wobei der Fehlerausbreitungsgraph ein Wissensgraph der Fehlerausbreitung ist.

7. Verfahren nach Anspruch 3 oder 5, ferner umfassend das Aufbauen des Bayesschen Modells, das umfasst:
Löschen (S611) eines Knotens, dessen Verifizierbarkeitsattribut ´´nicht verifizierbar´´ ist, in dem Fehlerausbreitungsgraphen;
Löschen (S611) von Zuordnungsbeziehungen in Bezug auf den gelöschten Knoten;
Herstellen (S612), gemäß den gelöschten Zuordnungsbeziehungen, einer Zuordnungsbeziehung zwischen Knoten, die dem gelöschten Knoten zugeordnet sind, um einen vorverarbeiteten Fehlerausbreitungsgraphen zu erhalten; und
jeweiliges Umwandeln (S62) aller Knoten und Zuordnungsbeziehungen in dem vorverarbeiteten Fehlerausbreitungsgraphen in Knoten und Zuordnungsbeziehungen in dem Bayesschen Modell, um das Bayessche Modell aufzubauen,
wobei das Verifizierbarkeitsattribut repräsentiert, ob der Knoten durch ein Regelattribut des Knotens ´´verifizierbar´´ oder ´´nicht verifizierbar´´ ist.

8. Vorrichtung zum Bestimmen einer Grundursache eines Fehlers, umfassend: ein erstes Bestimmungsmodul (101) und ein zweites Bestimmungsmodul (102), wobei
das erste Bestimmungsmodul (101) konfiguriert ist, um Fehlereigenschaftsinformationen als Reaktion auf einen Fehler zu bestimmen, der in einem Service auftritt, wobei die Fehlereigenschaftsinformationen mindestens einen Service, bei dem ein Fehler auftritt, einen Fehlertyp und ein Ereignis in Bezug auf den Fehler umfassen, wobei das Ereignis in Bezug auf den Fehler mindestens einen Alarm, eine Benachrichtigung, eine Durchführungsausnahme, eine Konfigurationsausnahme, eine Protokollausnahme umfasst; und
das zweite Bestimmungsmodul (102) konfiguriert ist, um einen Fehlergrundursachenknoten gemäß den Fehlereigenschaftsinformationen und einem voreingestellten Fehlerausbreitungsgraphen zu bestimmen,
wobei der voreingestellte Fehlerausbreitungsgraph dem Fehlertyp entspricht und aus Knoten und Kante besteht, wobei die Knoten einen Fehlerknoten zum Repräsentieren des Fehlertyps, eine Vielzahl von Fehlergrundursachenknoten zum Repräsentieren von Fehlergrundursachentypen von Fehlergrundursachen und eine Vielzahl von Fehlerausbreitungsknoten zum Repräsentieren von Ereignissen in Bezug auf den Fehler und zwischen der Vielzahl von Fehlergrundursachenknoten und dem Fehlerknoten umfassen, wobei eine Kante der Kanten, die zwei Knoten der Knoten verbindet, eine Zuordnungsbeziehung repräsentiert, die eine Richtung zwischen den zwei Knoten aufweist, und die Zuordnungsbeziehung eine Ursachenbeziehung repräsentiert, wobei jeder der Fehlergrundursachenknoten ohne einen Fehlerausbreitungsknoten direkt mit dem Fehlerknoten verbunden ist oder über mindestens einen der Fehlerausbreitungsknoten mit dem Fehlerknoten verbunden ist, wobei, wenn der Fehler auftritt, der Fehler an einem der Vielzahl von Fehlergrundursachenknoten beginnt, durch mindestens die Vielzahl von Fehlerausbreitungsknoten verläuft und an dem Fehlerknoten ankommt,
wobei das Ereignis in Bezug auf den Fehler in den Fehlereigenschaftsinformationen einem der Ereignisse in Bezug auf den Fehler in dem voreingestellten Fehlerausbreitungsgraphen entspricht,
wobei das zweite Bestimmungsmodul (102) ferner konfiguriert ist, um den voreingestellten Fehlerausbreitungsgraphen aus allen voreingestellten Fehlerausbreitungsgraphen auszuwählen und den Fehlergrundursachenknoten gemäß dem ausgewählten Fehlerausbreitungsgraphen zu bestimmen,
wobei das zweite Bestimmungsmodul (102) ferner konfiguriert ist, um einen Knoten, der eine Zuordnungsbeziehung mit dem Fehlerknoten in dem ausgewählten Fehlerausbreitungsgraphen aufweist, gemäß Zuordnungsbeziehungen in dem ausgewählten Fehlerausbreitungsgraphen zu bestimmen, einen Knotentyp des Knotens zu bestimmen und einen vermuteten Fehlergrundursachenknoten zumindest gemäß dem Knotentyp zu bestimmen, wobei der Knotentyp angibt, dass der Knoten ein Fehlergrundursachenknoten oder ein Fehlerausbreitungsknoten ist, der vermutete Fehlergrundursachenknoten einer der Vielzahl von Fehlergrundursachenknoten in dem ausgewählten Fehlerausbreitungsgraphen ist und die Anzahl von vermuteten Fehlergrundursachenknoten kleiner ist als die von Fehlergrundursachenknoten in dem ausgewählten Fehlerausbreitungsgraphen, und
wobei das zweite Bestimmungsmodul (102) ferner konfiguriert ist, um als Reaktion darauf, dass der Knotentyp angibt, dass der Knoten der Fehlergrundursachenknoten ist, den Knoten als den vermuteten Fehlergrundursachenknoten zu bestimmen.

9. Vorrichtung zum Bestimmen einer Grundursache eines Fehlers nach Anspruch 8, wobei das erste Bestimmungsmodul (101) ferner konfiguriert ist, um einen Pfad des Service zu bestimmen, bei dem der Fehler auftritt, und das Ereignis in Bezug auf den Fehler gemäß dem Pfad zu erfassen.

10. Vorrichtung zum Bestimmen einer Grundursache eines Fehlers nach Anspruch 9, ferner umfassend ein drittes Bestimmungsmodul (103), das konfiguriert ist, um ein Bayessches Modell, das dem ausgewählten Fehlerausbreitungsgraphen entspricht, aus voreingestellten Bayesschen Modellen auszuwählen, den Fehlergrundursachenknoten, den Fehlertyp und das Ereignis in Bezug auf den Fehler in das ausgewählte Bayessche Modell einzugeben und eine Fehlergrundursachenwahrscheinlichkeit des Fehlergrundursachenknotens durch probabilistisches Schlussfolgern durch das ausgewählte Bayessche Modell auszugeben.

11. Vorrichtung zum Bestimmen einer Grundursache eines Fehlers nach Anspruch 8, wobei das zweite Bestimmungsmodul (102) ferner konfiguriert ist, um als Reaktion darauf, dass der Knotentyp der Fehlerausbreitungsknoten ist, den vermuteten Fehlergrundursachenknoten gemäß Knotenattributen des Knotens zu bestimmen,
wobei das zweite Bestimmungsmodul (102) ferner konfiguriert ist, um als Reaktion darauf, dass der Knotentyp angibt, dass der Knoten der Fehlerausbreitungsknoten ist, zu bestimmen, ob ein Verifizierbarkeitsattribut des Knotens ´´verifizierbar´´ oder ´´nicht verifizierbar´´ ist, und
wobei das zweite Bestimmungsmodul (102) ferner konfiguriert ist, um als Reaktion darauf, dass das Verifizierbarkeitsattribut des Knotens ´´verifizierbar´´ ist, zu bestimmen, ob ein Regelattribut des Knotens erfüllt ist;
als Reaktion darauf, dass das Regelattribut erfüllt ist, das zweite Bestimmungsmodul (102) ferner konfiguriert ist, um einen nächsten Knoten, der eine Zuordnungsbeziehung mit dem Fehlerausbreitungsknoten aufweist, gemäß dem ausgewählten Fehlerausbreitungsgraphen zu bestimmen, einen Knotentyp des nächsten Knotens zu bestimmen und den vermuteten Fehlergrundursachenknoten gemäß dem Knotentyp des nächsten Knotens zu bestimmen;
als Reaktion darauf, dass das Regelattribut nicht erfüllt ist, das zweite Bestimmungsmodul (102) ferner konfiguriert ist, um das Bestimmen des nächsten Knotens, der die Zuordnungsbeziehung mit dem Fehlerausbreitungsknoten aufweist, zu stoppen;
als Reaktion darauf, dass das Verifizierbarkeitsattribut des Knotens ´´nicht verifizierbar´´ ist, das zweite Bestimmungsmodul (102) ferner konfiguriert ist, um den nächsten Knoten, der die Zuordnungsbeziehung mit dem Fehlerausbreitungsknoten aufweist, gemäß dem ausgewählten Fehlerausbreitungsgraphen zu bestimmen, den Knotentyp des nächsten Knotens zu bestimmen und den vermuteten Fehlergrundursachenknoten gemäß dem Knotentyp des nächsten Knotens zu bestimmen,
wobei das Verifizierbarkeitsattribut repräsentiert, ob der Fehlerausbreitungsknoten durch das Regelattribut ´´verifizierbar´´ oder ´´nicht verifizierbar´´ ist.

12. Vorrichtung zum Bestimmen einer Grundursache eines Fehlers nach Anspruch 11, ferner umfassend ein drittes Bestimmungsmodul (103), das konfiguriert ist, um ein Bayessches Modell, das dem ausgewählten Fehlerausbreitungsgraphen entspricht, aus voreingestellten Bayesschen Modellen auszuwählen, den vermuteten Fehlergrundursachenknoten, den Fehlertyp und das Ereignis in Bezug auf den Fehler in das ausgewählte Bayessche Modell einzugeben und eine Fehlergrundursachenwahrscheinlichkeit des vermuteten Fehlergrundursachenknotens durch das ausgewählte Bayessche Modell auszugeben.

13. Vorrichtung zum Bestimmen einer Grundursache eines Fehlers nach einem der Ansprüche 8 bis 12, ferner umfassend ein Fehlerausbreitungsgraph-Erzeugungsmodul, das konfiguriert ist zum
Erfassen, aus einer voreingestellten Datenbank von Wissen und Erfahrung von Betrieb und Wartung, von Fehlerinformationen, die Fehlertypen, Fehlergrundursachentypen, Ereignisse in Bezug auf die Fehlertypen und Zuordnungsbeziehungen zwischen den Fehlertypen, den Fehlergrundursachentypen und den Ereignissen in Bezug auf die Fehlertypen umfassen, und
Erzeugen eines Fehlerausbreitungsgraphen für jeden der Fehlertypen gemäß den Fehlerinformationen, wobei der Fehlerausbreitungsgraph ein Wissensgraph der Fehlerausbreitung ist.

14. Vorrichtung zum Bestimmen einer Grundursache eines Fehlers nach Anspruch 10 oder 12, ferner umfassend ein Bayessches Modell-Aufbaumodul, das konfiguriert ist zum
Löschen eines Knotens, dessen Verifizierbarkeitsattribut ´´nicht verifizierbar´´ ist, in dem Fehlerausbreitungsgraphen,
Löschen von Zuordnungsbeziehungen in Bezug auf den gelöschten Knoten,
Herstellen, gemäß den gelöschten Zuordnungsbeziehungen, einer Zuordnungsbeziehung zwischen Knoten, die dem gelöschten Knoten zugeordnet sind, um einen vorverarbeiteten Fehlerausbreitungsgraphen zu erhalten, und
jeweiligen Umwandeln aller Knoten und Zuordnungsbeziehungen in dem vorverarbeiteten Fehlerausbreitungsgraphen in Knoten und Zuordnungsbeziehungen in dem Bayesschen Modell, um das Bayessche Modell aufzubauen,
wobei das Verifizierbarkeitsattribut repräsentiert, ob der Knoten durch ein Regelattribut des Knotens ´´verifizierbar´´ oder ´´nicht verifizierbar´´ ist.

## Revendications

1. Procédé pour déterminer une cause fondamentale de défaut, comprenant les étapes consistant à :
déterminer (S11) des informations caractéristiques de défaut en réponse à un défaut se produisant dans un service, dans lequel les informations caractéristiques de défaut comprennent au moins un service où un défaut se produit, un type de défaut et un événement lié au défaut, l'événement lié au défaut comprend au moins une alarme, une notification, une exception de performance, une exception de configuration, une exception de journal ; et
déterminer (S12) un nœud de cause fondamentale de défaut en fonction des informations caractéristiques de défaut et d'un graphe de propagation de défaut prédéfini,
dans lequel le graphe de propagation de défaut prédéfini correspond au type de défaut et est constitué de nœuds et d'arêtes, les nœuds comprennent un nœud de défaut pour représenter le type de défaut, une pluralité de nœuds de cause fondamentale de défaut pour représenter des types de cause fondamentale de défaut de causes fondamentales de défaut, et une pluralité de nœuds de propagation de défaut pour représenter des événements liés au défaut et entre la pluralité de nœuds de cause fondamentale de défaut et le nœud de défaut, une arête des arêtes qui connecte deux nœuds des nœuds, représente une relation d'association ayant une direction entre les deux nœuds, et la relation d'association représente une relation de cause, chacun des nœuds de cause fondamentale de défaut est directement connecté au nœud de défaut sans aucun nœud de propagation de défaut ou est connecté au nœud de défaut par l'intermédiaire d'au moins l'un des nœuds de propagation de défaut, lorsque le défaut se produit, le défaut commence à partir de l'un de la pluralité de nœuds de cause fondamentale de défaut, passe à travers au moins l'un de la pluralité de nœuds de propagation de défaut et arrive au nœud de défaut,
dans lequel l'événement lié au défaut dans les informations caractéristiques de défaut correspond à l'un des événements liés au défaut dans le graphe de propagation de défaut prédéfini,
dans lequel déterminer (S12) le nœud de cause fondamentale de défaut en fonction des informations caractéristiques de défaut et du graphe de propagation de défaut prédéfini comprend les étapes consistant à :
sélectionner le graphe de propagation de défaut prédéfini parmi tous les graphes de propagation de défaut prédéfinis ; et
déterminer le nœud de cause fondamentale de défaut en fonction du graphe de propagation de défaut sélectionné,
dans lequel déterminer le nœud de cause fondamentale de défaut en fonction du graphe de propagation de défaut sélectionné comprend les étapes consistant à :
déterminer (S31) un nœud ayant une relation d'association avec le nœud de défaut dans le graphe de propagation de défaut sélectionné en fonction de relations d'association dans le graphe de propagation de défaut sélectionné ; et
déterminer (S32) un type de nœud du nœud, dans lequel le type de nœud indique que le nœud est un nœud de cause fondamentale de défaut ou un nœud de propagation de défaut ; et
déterminer (S33) un nœud de cause fondamentale de défaut suspecté au moins en fonction du type de nœud, dans lequel le nœud de cause fondamentale de défaut suspecté est l'un de la pluralité de nœuds de cause fondamentale de défaut dans le graphe de propagation de défaut sélectionné, et le nombre de nœuds de cause fondamentale de défaut suspectés est inférieur à celui de nœuds de cause fondamentale de défaut dans le graphe de propagation de défaut sélectionné, et
dans lequel déterminer (S33) le nœud de cause fondamentale de défaut suspecté au moins en fonction du type de nœud comprend l'étape consistant à :
en réponse au type de nœud indiquant que le nœud est le nœud de cause fondamentale de défaut, déterminer le nœud comme étant le nœud de cause fondamentale de défaut suspecté.

2. Procédé selon la revendication 1, dans lequel déterminer (S11) les informations caractéristiques de défaut comprend les étapes consistant à :
déterminer un trajet du service où le défaut se produit ; et
acquérir l'événement lié au défaut en fonction du trajet.

3. Procédé selon la revendication 2, dans lequel, après avoir déterminé le nœud de cause fondamentale de défaut en fonction du graphe de propagation de défaut sélectionné, le procédé comprend en outre les étapes consistant à :
sélectionner un modèle bayésien correspondant au graphe de propagation de défaut sélectionné parmi des modèles bayésiens prédéfinis ; et
entrer le nœud de cause fondamentale de défaut, le type de défaut et l'événement lié au défaut dans le modèle bayésien sélectionné, délivrer une probabilité de cause fondamentale de défaut du nœud de cause fondamentale de défaut par raisonnement probabiliste par le modèle bayésien sélectionné.

4. Procédé selon la revendication 2, dans lequel déterminer (S33) le nœud de cause fondamentale de défaut suspecté au moins en fonction du type de nœud comprend en outre l'étape consistant à :
en réponse au type de nœud indiquant que le nœud est le nœud de propagation de défaut, déterminer le nœud de cause fondamentale de défaut suspecté en fonction d'attributs de nœud du nœud,
dans lequel déterminer le nœud de cause fondamentale de défaut suspecté en fonction d'attributs de nœud du nœud comprend les étapes consistant à :
déterminer si un attribut de vérifiabilité du nœud est « vérifiable » ou « non vérifiable » ;
en réponse à l'attribut de vérifiabilité du nœud étant « vérifiable », déterminer si un attribut de règle du nœud est satisfait ;
en réponse à l'attribut de règle étant satisfait, déterminer un nœud suivant ayant une relation d'association avec le nœud en fonction du graphe de propagation de défaut sélectionné, déterminer un type de nœud du nœud suivant, et déterminer le nœud de cause fondamentale de défaut suspecté en fonction du type de nœud du nœud suivant ; et en réponse à l'attribut de règle n'étant pas satisfait, arrêter de déterminer le nœud suivant ayant la relation d'association avec le nœud ; et
en réponse à l'attribut de vérifiabilité du nœud étant « non vérifiable », déterminer le nœud suivant ayant la relation d'association avec le nœud en fonction du graphe de propagation de défaut sélectionné, déterminer le type de nœud du nœud suivant, et déterminer le nœud de cause fondamentale de défaut suspecté en fonction du type de nœud du nœud,
dans lequel l'attribut de vérifiabilité représente si le nœud de propagation de défaut est « vérifiable » ou « non vérifiable » par l'intermédiaire de l'attribut de règle.

5. Procédé selon la revendication 4, dans lequel après détermination du nœud de cause fondamentale de défaut suspecté, le procédé comprend en outre les étapes consistant à :
sélectionner un modèle bayésien correspondant au graphe de propagation de défaut sélectionné parmi des modèles bayésiens prédéfinis ; et
entrer le nœud de cause fondamentale de défaut suspecté, le type de défaut et l'événement lié au défaut dans le modèle bayésien sélectionné, délivrer une probabilité de cause fondamentale de défaut du nœud de cause fondamentale de défaut suspecté par le modèle bayésien sélectionné.

6. Procédé selon l'une quelconque des revendications 1 à 5, comprenant en outre générer un graphe de propagation de défaut, qui comprend les étapes consistant à :
acquérir (S51), à partir d'une base de données prédéfinie de connaissances et d'expérience de fonctionnement et de maintenance, des informations de défaut comprenant des types de défaut, des types de cause fondamentale de défaut, des événements liés aux types de défaut, et des relations d'association parmi les types de défaut, les types de cause fondamentale de défaut et les événements liés aux types de défaut ; et
générer (S52) un graphe de propagation de défaut pour chacun des types de défaut en fonction des informations de défaut, dans lequel le graphe de propagation de défaut est un graphe de connaissances de propagation de défaut.

7. Procédé selon la revendication 3 ou 5, comprenant en outre construire le modèle bayésien, qui comprend les étapes consistant à :
supprimer (S611) un nœud dont l'attribut de vérifiabilité est « non vérifiable » dans le graphe de propagation de défaut ;
supprimer (S611) des relations d'association liées au nœud supprimé ;
établir (S612), en fonction des relations d'association supprimées, une relation d'association entre des nœuds associés au nœud supprimé, de manière à obtenir un graphe de propagation de défaut prétraité ; et
convertir respectivement (S62) tous les nœuds et relations d'association dans le graphe de propagation de défaut prétraité en nœuds et relations d'association dans le modèle bayésien, de manière à construire le modèle bayésien,
dans lequel l'attribut de vérifiabilité représente si le nœud est « vérifiable » ou « non vérifiable » par l'intermédiaire d'un attribut de règle du nœud.

8. Dispositif pour déterminer une cause fondamentale de défaut, comprenant : un premier module de détermination (101) et un second module de détermination (102), dans lequel
le premier module de détermination (101) est configuré pour déterminer des informations caractéristiques de défaut en réponse à un défaut se produisant dans un service, dans lequel les informations caractéristiques de défaut comprennent au moins un service où un défaut se produit, un type de défaut et un événement lié au défaut, l'événement lié au défaut comprend au moins une alarme, une notification, une exception de performance, une exception de configuration, une exception de journal ; et
le second module de détermination (102) est configuré pour déterminer un nœud de cause fondamentale de défaut en fonction des informations caractéristiques de défaut et d'un graphe de propagation de défaut prédéfini,
dans lequel le graphe de propagation de défaut prédéfini correspond au type de défaut et est constitué de nœuds et d'arêtes, les nœuds comprennent un nœud de défaut pour représenter le type de défaut, une pluralité de nœuds de cause fondamentale de défaut pour représenter des types de cause fondamentale de défaut de causes fondamentales de défaut, et une pluralité de nœuds de propagation de défaut pour représenter des événements liés au défaut et entre la pluralité de nœuds de cause fondamentale de défaut et le nœud de défaut, une arête des arêtes qui connecte deux nœuds des nœuds, représente une relation d'association ayant une direction entre les deux nœuds, et la relation d'association représente une relation de cause, chacun des nœuds de cause fondamentale de défaut est directement connecté au nœud de défaut sans aucun nœud de propagation de défaut ou est connecté au nœud de défaut par l'intermédiaire d'au moins l'un des nœuds de propagation de défaut, lorsque le défaut se produit, le défaut commence à partir de l'un de la pluralité de nœuds de cause fondamentale de défaut, passe à travers au moins l'un de la pluralité de nœuds de propagation de défaut et arrive au nœud de défaut,
dans lequel l'événement lié au défaut dans les informations caractéristiques de défaut correspond à l'un des événements liés au défaut dans le graphe de propagation de défaut prédéfini,
dans lequel le second module de détermination (102) est en outre configuré pour sélectionner le graphe de propagation de défaut prédéfini parmi tous les graphes de propagation de défaut prédéfinis, et déterminer le nœud de cause fondamentale de défaut en fonction du graphe de propagation de défaut sélectionné,
dans lequel le second module de détermination (102) est en outre configuré pour déterminer un nœud ayant une relation d'association avec le nœud de défaut dans le graphe de propagation de défaut sélectionné en fonction de relations d'association dans le graphe de propagation de défaut sélectionné, déterminer un type de nœud du nœud, et déterminer un nœud de cause fondamentale de défaut suspecté au moins en fonction du type de nœud, dans lequel le type de nœud indique que le nœud est un nœud de cause fondamentale de défaut ou un nœud de propagation de défaut, le nœud de cause fondamentale de défaut suspecté est l'un de la pluralité de nœuds de cause fondamentale de défaut dans le graphe de propagation de défaut sélectionné, et le nombre de nœuds de cause fondamentale de défaut suspectés est inférieur à celui de nœuds de cause fondamentale de défaut dans le graphe de propagation de défaut sélectionné, et
dans lequel le second module de détermination (102) est en outre configuré pour, en réponse au type de nœud indiquant que le nœud est le nœud de cause fondamentale de défaut, déterminer le nœud comme étant le nœud de cause fondamentale de défaut suspecté.

9. Dispositif pour déterminer une cause fondamentale de défaut selon la revendication 8, dans lequel le premier module de détermination (101) est en outre configuré pour déterminer un trajet du service où le défaut se produit, et acquérir l'événement lié au défaut en fonction du trajet.

10. Dispositif pour déterminer une cause fondamentale de défaut selon la revendication 9, comprenant en outre un troisième module de détermination (103) configuré pour sélectionner un modèle bayésien correspondant au graphe de propagation de défaut sélectionné parmi des modèles bayésiens prédéfinis, entrer le nœud de cause fondamentale de défaut, le type de défaut et l'événement lié au défaut dans le modèle bayésien sélectionné, et délivrer une probabilité de cause fondamentale de défaut du nœud de cause fondamentale de défaut par raisonnement probabiliste par le modèle bayésien sélectionné.

11. Dispositif pour déterminer une cause fondamentale de défaut selon la revendication 8, dans lequel le second module de détermination (102) est en outre configuré pour, en réponse au type de nœud étant le nœud de propagation de défaut, déterminer le nœud de cause fondamentale de défaut suspecté en fonction d'attributs de nœud du nœud,
dans lequel le second module de détermination (102) est en outre configuré pour, en réponse au type de nœud indiquant que le nœud est le nœud de propagation de défaut, déterminer si un attribut de vérifiabilité du nœud est « vérifiable » ou « non vérifiable », et
dans lequel le second module de détermination (102) est en outre configuré pour, en réponse à l'attribut de vérifiabilité du nœud étant « vérifiable », déterminer si un attribut de règle du nœud est satisfait ;
en réponse à l'attribut de règle étant satisfait, le second module de détermination (102) est en outre configuré pour déterminer un nœud suivant ayant une relation d'association avec le nœud de propagation de défaut en fonction du graphe de propagation de défaut sélectionné, déterminer un type de nœud du nœud suivant, et déterminer le nœud de cause fondamentale de défaut suspecté en fonction du type de nœud du nœud suivant ;
en réponse à l'attribut de règle n'étant pas satisfait, le second module de détermination (102) est en outre configuré pour arrêter de déterminer le nœud suivant ayant la relation d'association avec le nœud de propagation de défaut ;
en réponse à l'attribut de vérifiabilité du nœud étant « non vérifiable », le second module de détermination (102) est en outre configuré pour déterminer le nœud suivant ayant la relation d'association avec le nœud de propagation de défaut en fonction du graphe de propagation de défaut sélectionné, déterminer le type de nœud du nœud suivant, et déterminer le nœud de cause fondamentale de défaut suspecté en fonction du type de nœud du nœud suivant,
dans lequel l'attribut de vérifiabilité représente si le nœud de propagation de défaut est « vérifiable » ou « non vérifiable » par l'intermédiaire de l'attribut de règle.

12. Dispositif pour déterminer une cause fondamentale de défaut selon la revendication 11, comprenant en outre un troisième module de détermination (103) configuré pour sélectionner un modèle bayésien correspondant au graphe de propagation de défaut sélectionné parmi des modèles bayésiens prédéfinis, entrer le nœud de cause fondamentale de défaut suspecté, le type de défaut et l'événement lié au défaut dans le modèle bayésien sélectionné, et délivrer une probabilité de cause fondamentale de défaut du nœud de cause fondamentale de défaut suspecté par le modèle bayésien sélectionné.

13. Dispositif pour déterminer une cause fondamentale de défaut selon l'une quelconque des revendications 8 à 12, comprenant en outre un module de génération de graphe de propagation de défaut configuré pour
acquérir, à partir d'une base de données prédéfinie de connaissances et d'expérience de fonctionnement et de maintenance, des informations de défaut comprenant des types de défaut, des types de cause fondamentale de défaut, des événements liés aux types de défaut, et des relations d'association parmi les types de défaut, les types de cause fondamentale de défaut et les événements liés aux types de défaut, et
générer un graphe de propagation de défaut pour chacun des types de défaut en fonction des informations de défaut, dans lequel le graphe de propagation de défaut est un graphe de connaissances de propagation de défaut.

14. Dispositif pour déterminer une cause fondamentale de défaut selon la revendication 10 ou 12, comprenant en outre un module de construction de modèle bayésien configuré pour
supprimer un nœud dont l'attribut de vérifiabilité est « non vérifiable » dans le graphe de propagation de défaut,
supprimer des relations d'association liées au nœud supprimé,
établir, en fonction des relations d'association supprimées, une relation d'association entre des nœuds associés au nœud supprimé, de manière à obtenir un graphe de propagation de défaut prétraité, et
convertir respectivement tous les nœuds et relations d'association dans le graphe de propagation de défaut prétraité en nœuds et relations d'association dans le modèle bayésien, de manière à construire le modèle bayésien,
dans lequel l'attribut de vérifiabilité représente si le nœud est « vérifiable » ou « non vérifiable » par l'intermédiaire d'un attribut de règle du nœud.
